# EUROPEAN PATENT SPECIFICATION

(11) **EP 1 270 381 B1**
(45) Date of publication and mention of the grant of the patent: **20.08.2008**
(21) Application number: 02014336.8
(22) Date of filing: 27.06.2002
(51) Int. Cl.: B62D 33/06, B60N 2/30

(54) **A cab for a commercial vehicle**
Fahrerhaus für einen Lastkraftwagen
Une cabine pour un camion

(30) Priority: 29.06.2001 IT TO20010624
(43) Date of publication of application: 02.01.2003
(73) Proprietor: IVECO S.p.A., 10156 Torino (IT)
(72) Inventor: Ropolo, Bruno, 14010 San Paolo Solbrito (IT)
(74) Representative: Gervasi, Gemma

(56) References cited:
- DE-A- 19 628 699
- DE-U- 9 320 377
- US-A- 4 215 899
- US-A- 5 984 404

## Description

The present invention relates to a cab for a commercial vehicle.

The cabs of commercial vehicles, particularly of heavy goods vehicles for long journeys, are conventionally provided with two seats side by side, the main one of which is for the driver and the other, auxiliary one of which is for a passenger.

This type of conventional arrangement, which results from the practice of using two drivers who drive alternately, no longer represents the current situation, since the widely used practice in modern commercial vehicles is to use one driver only, and, accordingly, one front seat only. Since a system such as this makes it substantially impossible to transport a possible passenger, it is known that this disadvantage can be obviated by providing an auxiliary seat which is disposed in the rear part of the cab and which is offset in relation to the front seat for the driver.

The adoption of an auxiliary seat such as this has created the problem of mounting a bunk, which is easily accessible and usable, inside the cab in such a way that it does not impede the use of said auxiliary seat.

US-A-5984404 , which disclosure forming the preamble of claim 1, discloses a vehicle with a sleeping compartment and a bed positioned at an upper berth position. A bed shifter is provided for shifting the bed between bed sleeping and bed storage positions. Bed elements of variable length are provided to shift the bed by varying the length of these elements. In one form, the elements comprise elongated straps which are wound and unwound from a rotatable shaft to raise and lower the bed between bed sleeping and bed storage positions. In other forms there are provided fluid cylinders, or screw jacks, or a scissors structure. These elements however are complicated, expensive and not sufficiently reliable.

The object of the present invention is to solve the aforementioned problem in a simple and economical manner, without, in particular, the need of shifting elements of variable length. According to the present invention, it is provided a cab for a commercial vehicle, comprising a rear wall, an auxiliary seat accommodated in a position adjacent to said rear wall, and a transverse auxiliary bunk which is disposed above said auxiliary seat and is adjustable between a raised, inoperative position in which said auxiliary bunk allows said auxiliary seat to be used, and a lowered, horizontal operating position, said auxiliary bunk comprising two longitudinal ends, and, at each separate longitudinal end, a front longitudinal pin and a rear longitudinal pin; said pins being disposed coaxially in pairs in order to define a front axis and a rear axis extending longitudinally along said auxiliary bunk; and first supporting and guide means are provided for said rear pins and second supporting and guide means are provided for said front pins to allow said auxiliary bunk to be moved between said raised and lowered positions by a movement comprising a first rotation about said rear axis and a second rotation about said front axis; characterised in that said second supporting and guide means comprises two substantially horizontal guides, and each front pin is capable of being supported on said respective guide and of being moved transversely along said guide.

According to a preferred embodiment, the cab defined above comprises a first and a second transverse bunk, said first bunk of which is disposed under the second; said auxiliary seat comprising a seat cushion defined by said first bunk, and said second bunk being said movable bunk.

The invention will now be described with reference to the accompanying drawings, which illustrate some non limiting examples of embodiments thereof, and where:
Figure 1 is a partial perspective view of a preferred embodiment of the cab according to the present invention; Figure 2 is a side view, on an enlarged scale and shown partly in section, of a detail of Figure 1;
Figure 3 is a cross-section on an enlarged scale showing two details of Figure 2;
Figure 4 is similar to Figure 2 and illustrates the detail shown in Figure 2 in a different operating position;
Figure 5 is a section, on an enlarged scale, along line V-V of Figure 4;
Figure 6 is a side view, on an enlarged scale and shown partly in section, of a variation of a detail of Figure 1; and
Figure 7 is a perspective view of a detail of Figure 6, with some parts removed for clarity.

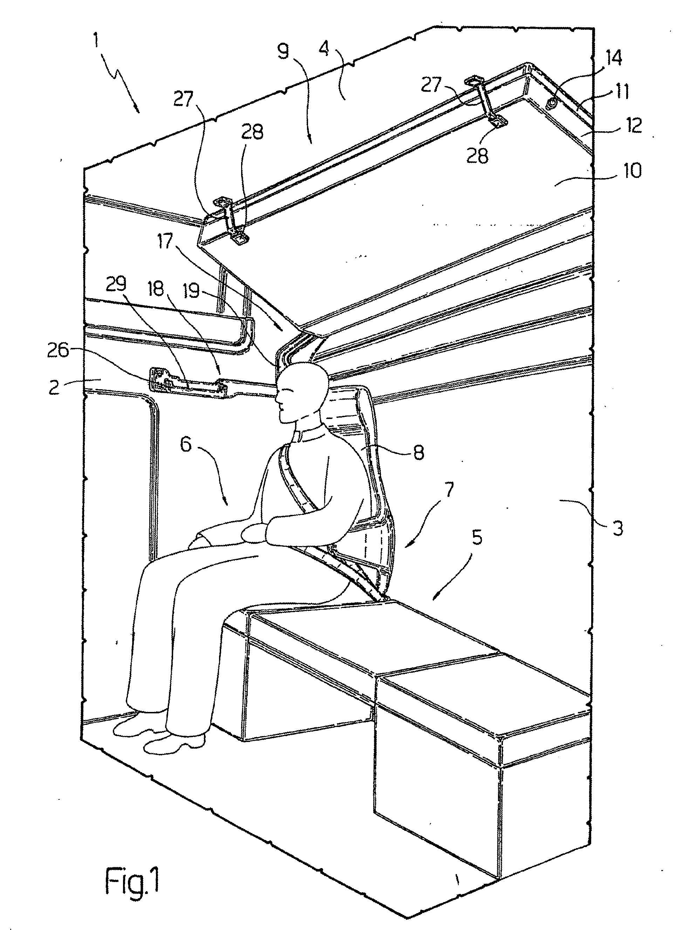

In Figure 1, a cab of a commercial vehicle, particularly of a heavy goods vehicle for long journeys is denoted in its entirety by 1.

The cab essentially comprises two vertical side walls 2, only one of which is shown in Figure 1, a substantially vertical rear wall 3 which is transverse to the two side walls 2, a substantially horizontal roof 4, a front driver's seat (which is known and which is not illustrated) and a transverse bunk 5 positioned behind said driver's seat (not illustrated) between the side walls 2 and along the rear wall 3 at a level substantially equal to that of a seat cushion (not illustrated) of the driver's seat (not illustrated).

An end portion of the bunk 5 can be used, as in the example illustrated, as a seat cushion 6 of an auxiliary seat 7, which comprises a seat back 8 which can be removably attached to the portion of the rear wall 3 which extends above the seat cushion 6.

In addition, the cab comprises an auxiliary bunk 9 which is disposed between the side walls 2 and along the rear wall 3 above the bunk 5 and which essentially comprises a substantially rectangular frame 10, the top of which is provided with padding and which comprises two crosspieces 12 with parallel ends which are adjacent to the respective side walls 2. Two longitudinal pins 13 and 14 protrude externally from each crosspiece 12 parallel to the rear wall 3, the pin 13 of which is disposed in proximity to a rear end of the respective crosspiece 12 and with the other pin 13 defines a rear longitudinal axis 15 of the auxiliary bunk 9; whilst the pin 14 is disposed in proximity to a front end of the respective crosspiece 12 and with the other pin 14 defines a front longitudinal axis 16, which is parallel to the rear longitudinal axis 15, of the auxiliary bunk 9.

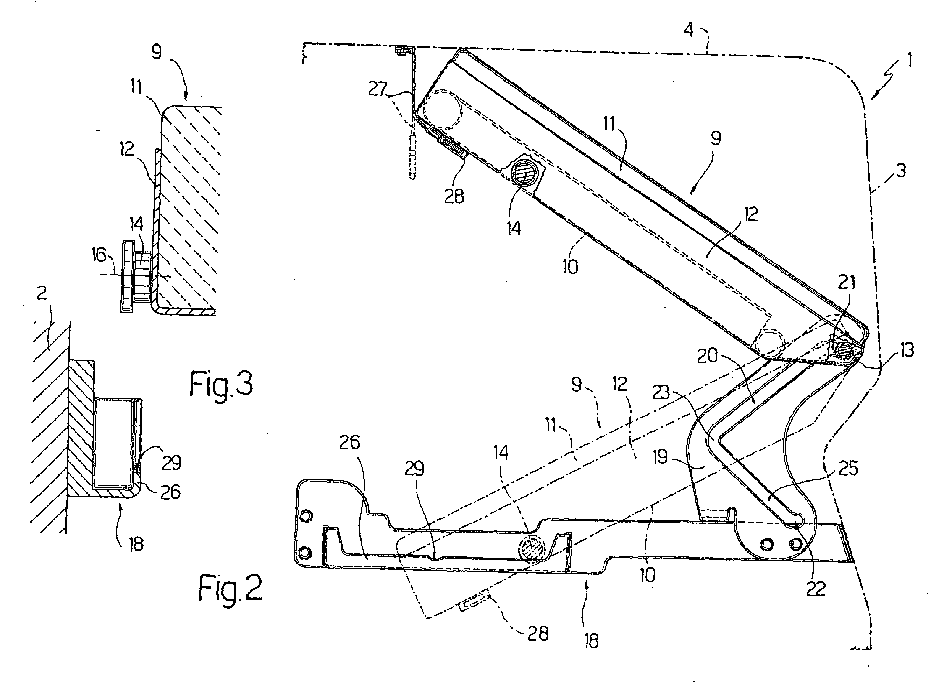

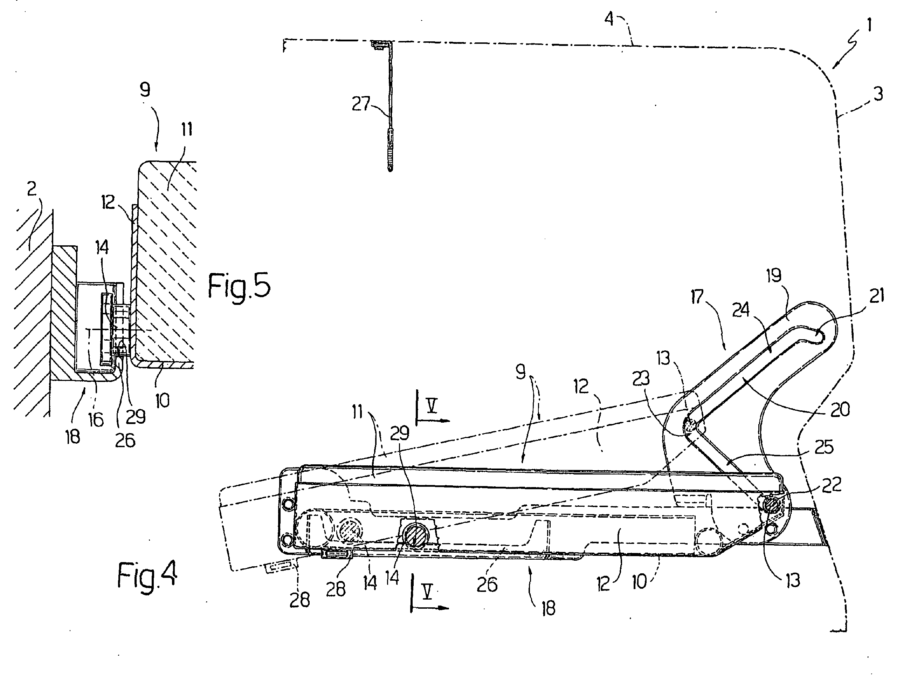

The auxiliary bunk 9 can be moved between a raised inoperative position (illustrated by the unbroken lines in Figures 1 and 2), in which the auxiliary bunk 9 is tilted forwards and upwards so that it provides a possible occupant of the auxiliary seat 7 with a space of sufficient height, and a lowered, horizontal operating position (illustrated by the unbroken lines in Figure 4), in which the auxiliary bunk 9 is disposed at a level and at distances from the roof 4 and from the bunk 5 so as to permit the comfortable, simultaneous use of both the bunks 5 and 9, via a series of intermediate positions (illustrated by the broken lines in Figures 4 and 2) so as to facilitate the movement of the auxiliary bunk 9 between said two raised and lowered positions.

The movement of the auxiliary bunk 9 between the raised and lowered positions is effected with the aid of two supporting and guide units 17 and 18, supporting and guide unit 17 of which comprises two supporting and guide plates 19, which are mirror images of each other and only one of which is illustrated. The plates 19 are disposed on opposite sides of the auxiliary bunk 9 and each of them is substantially situated in a vertical plane, is substantially anchored in a vertical position to the respective side wall 2 and comprises a slot which defines a sliding gate 20 for a respective pin 13. Each sliding gate 20 comprises two superimposed end parts 21 which are substantially horizontal (or preferably, as in the example illustrated, tilted downwards slightly towards the rear wall 3) and which define respective elements which provide stable support to the respective pin 13 when the auxiliary bunk 9 is disposed in its raised position and in its lowered position, respectively. In addition, each sliding gate 20 comprises an intermediate portion, which connects the two end parts 21 and 22 to each other, is substantially formed in the shape of a V and is disposed with its vertex 23 pointing forwards. Said intermediate portion comprises an upper arm 24 communicating with the end part 21 and a lower arm 25 communicating with the lower end of the upper arm 24, corresponding to the vertex 23 and to the end part 22.

The supporting and guide 18 unit comprises two guides 26, only one of which is illustrated, which are mirror images of each other, and which are transversely engaged in a free-sliding manner by the respective pins 14 during part of the movement of the auxiliary bunk 9 between the raised and lowered positions, and they support, in a stable position, said pins 14 and part of the weight of the auxiliary bunk 9 when the auxiliary bunk 9 is disposed in its lowered position. Each guide 26 is substantially anchored to the respective side wall 2 in a horizontal position and is coplanar with the respective supporting and guide plate 19, substantially at the level of the respective end part 22.

The operation of the auxiliary bunk 9 will now be described, starting from a situation in which the auxiliary bunk 9 is disposed, as illustrated in Figure 1, in its raised position with the pins 13 supported in a stable manner on the end parts 21 of the respective links 20 and maintained in said position by two strap coupling devices 27 which are attached to the roof 4 and which are removably coupled to respective coupling rings 28 which are fixedly attached to a bottom wall of the frame 10 of the auxiliary bunk 9.

The release of the coupling devices 27 causes the auxiliary bunk 9 to rotate downwards about the rear longitudinal axis 15 until it reaches an intermediate position as illustrated by the broken lines in Figure 2, in which the pins 14 are supported on a rear end of the respective guides 26. During this movement, during which the pins 13 are substantially maintained in a fixed position on the respective end parts 21 of the respective links 20, the descent of the auxiliary bunk 9 toward said intermediate position is accompanied by the expenditure of a relatively slight physical effort by the user from the instant when the bulk of the weight of the auxiliary bunk 9 is transferred, via the pins 13, on to the supporting and guide unit 17.

At this point, the auxiliary bunk 9, the weight of which is now completely supported by the supporting and guide units 17 and 18, is pulled forwards to cause the pins 13 to come out of the respective end parts 21 and to slide downwards, by gravity, along the arms 24 and 25 of the respective links 20, which first cause the pins 14 to slide from the rear end to a front end of the respective guides 26 with the corresponding positioning of the auxiliary bunk 9 in a further intermediate position, as illustrated by the broken lines in Figure 4, in which the pins 13 are disposed corresponding to the respective vertexes 23, and secondly cause the pins 14 to slide from the front end of the guides 26 towards seatings 29 which are accommodated in an intermediate position on the guides 26 and which are engaged by the pins 14 when the pins 13 reach the end parts 22 of the links 20.

With regard to the above statements, it should be emphasised that, during the movement of the pins 13 along the arms 24 and 25 of the respective links 20, the auxiliary bunk 9 completes a simple rotation around an instantaneous axis, which coincides with the front longitudinal axis 16, and moves with the axis 16 along the guides 26.

Movement of the auxiliary bunk 9 from the lowered position shown in Figure 4 to the raised position shown in Figure 1 is effected by repeating the operations described above in the reverse order.

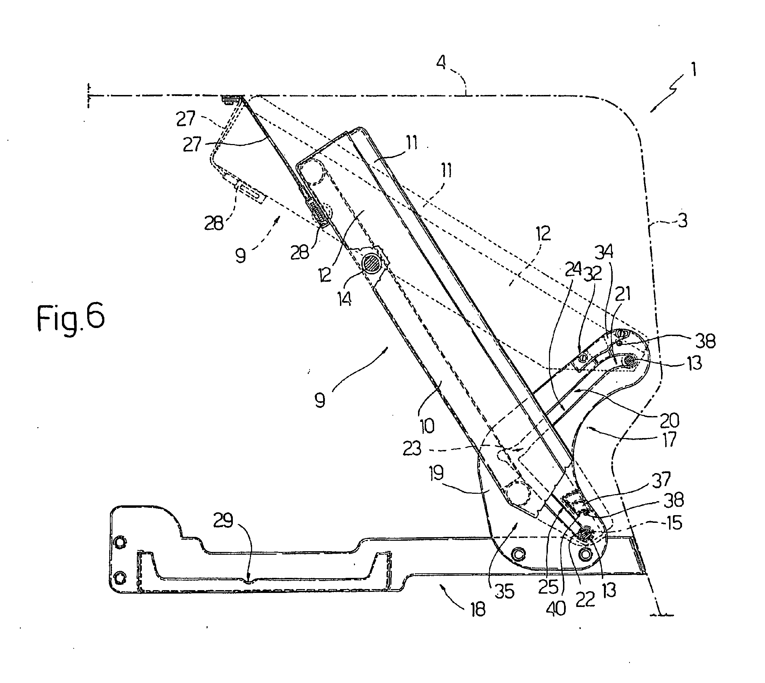

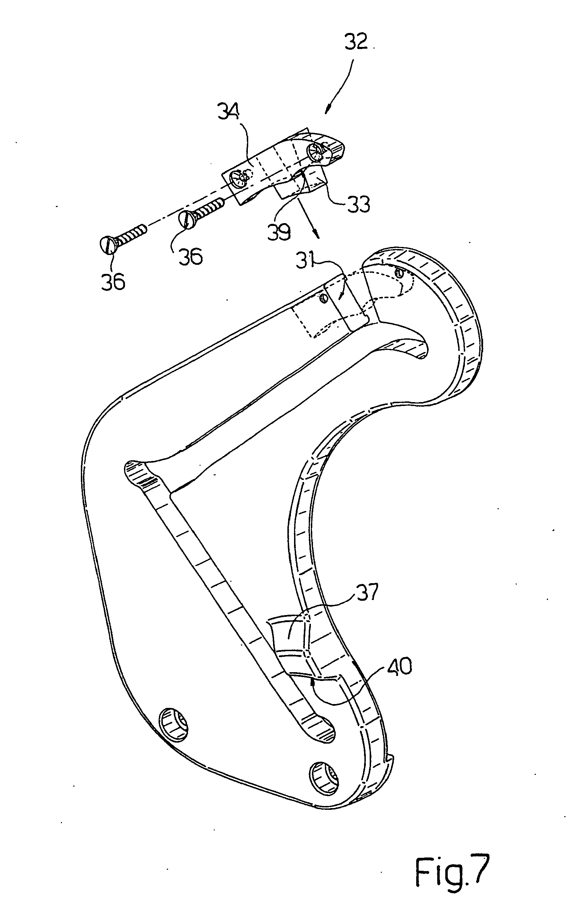

In the variant which is illustrated in Figures 6 and 7, each supporting and guide plate 19 comprises a recess 31, which is capable of allowing the respective pin 13 to be inserted in the sliding gate 20 and which is disposed corresponding to the junction between the upper arm 24 and part 21. The recess 31 is closed by a removable closure element 32, which comprises a wedge 33 for closing the recess 31 and a plate 34, which is integral with the wedge 33, is disposed at the side of the wedge 33 and is fixed by two screws 36, to a surface 35 of the plate 19 facing the auxiliary bunk 9.

In the variant which is illustrated in Figures 6 and 7, each supporting and guide plate 19 is also provided, corresponding to its surface 35, with two brake elements, a first of which is defined by the plate 34 and a second of which is defined by a protrusion 37 which projects from the surface 35 immediately above part 22 of sliding gate 20. The plate 34 and the protrusion 37 are capable of cooperating by friction at different times with a pin 38 which protrudes from rear end of the crosspiece 12 parallel to the pin 13 in order to damp possible oscillations of the auxiliary bunk 9 when the auxiliary bunk 9 is disposed in its raised position (as illustrated by the broken lines in Figure 6) and in its intermediate position, respectively, as illustrated by the unbroken lines in Figure 6, in which the pin 13 is supported on part 22 of sliding gate 20.

In particular, the plate 34 is delimited, on its the part facing the rear wall 3, by a concave surface 39 which engages by friction with the pin 38 when the auxiliary bunk 9 is disposed in its raised position described above, and is shaped so that, in use, part of the downward rotation of the auxiliary bunk 9 about the axis 15 is slowed down because of the friction between the pin 38 and the concave surface 39. In particular, the concave surface 39 substantially has the shape of a cylindrical sector, the axis of which coincides with the rear longitudinal axis 15 when the pin 13 is supported on part 21.

The protrusion 37 is delimited at the bottom by a concave surface 40 which is engaged by the pin 38 when the auxiliary bunk 9 is in the intermediate position described above. In particular, the concave surface 40 substantially has the shape of a cylindrical sector, the axis coincides of which with the rear longitudinal axis 15 when the pin 13 is supported on part 22, in order to slow down, in use, part of the downward rotation of the auxiliary bunk 9 about the axis 15.

## Claims

1. A cab for a commercial vehicle, comprising a rear wall (3), an auxiliary seat (7) accommodated in a position adjacent to said rear wall (3), and a transverse auxiliary bunk (9) which is disposed above said auxiliary seat (7) and is adjustable between a raised, inoperative position in which said auxiliary bunk (9) allows said auxiliary seat (7) to be used, and a lowered, horizontal operating position, said auxiliary bunk (9) comprising two longitudinal ends (12), and, at each separate longitudinal end (12), a front longitudinal pin (14) and a rear longitudinal pin (13); said pins (13,14) being disposed coaxially in pairs in order to define a front axis (16) and a rear axis (15) extending longitudinally along said auxiliary bunk (9); and first supporting and guide means (17) are provided for said rear pins (13) and second supporting and guide means (18) are provided for said front pins (14) to allow said auxiliary bunk (9) to be moved between said raised and lowered positions by a movement comprising a first rotation about said rear axis (15) and a second rotation about said front axis (16); **characterised in that** said second supporting and guide means (18) comprises two substantially horizontal guides (26), and each front pin (14) is capable of being supported on said respective guide (26) and of being moved transversely along said guide (26).

2. A cab according to claim 1, **characterised in that** it comprises a first and a second transverse bunk (5, 9), said first bunk (5) of which is disposed under the second (9); said auxiliary seat (7) comprising a seat cushion (6) defined by said first bunk (5), and said second bunk (9) being said auxiliary bunk (9).

3. A cab according to claims 1 or 2, **characterised in that** the raised inoperative position is a position tilted forwards and upwards.

4. A cab according to claim1, **characterised in that** said first supporting and guide means (17) comprise two supporting and guide devices (19) disposed at opposite longitudinal ends (12) of said auxiliary bunk (9) ; each of said (19) supporting and guide devices (19) comprising a first and a second supporting element, the first supporting element being disposed above the second in order to support a rear pin (13) in said raised position and in said lowered position, respectively.

5. A cab according to claim 4, **characterised in that** each supporting and guide device (19) comprises a sliding gate (20) for the respective rear pin; said sliding gate (20) connecting said two supporting elements to each other.

6. A cab according to claim 5, **characterised in that** said sliding gate (20) comprises two substantially horizontal end parts (21, 22), each of which defines a respective supporting element.

7. A cab according to claims 5 or 6, **characterised in that** each sliding gate (20) extends in a substantially vertical plane in order to define a sliding course of the rear pin between said two supporting elements.

8. A cab according to claim 7, **characterised in that** said course is substantially V-shaped with its vertex (23) pointing forwards and its free end communicating with the respective supporting elements.

9. A cab according to any one of claims 4 to 8, **characterised in that** said two substantially horizontal guides (26) are substantially coplanar with the respective supporting and guide means (19).

10. A cab according to any one of claims 1 to 9, **characterised in that** it comprises a rear wall (3) and two substantially vertical side walls (2) and a substantially horizontal roof (4); the first and second supporting and guide means (17) being supported by said side walls (2), and releasable coupling means (27) being provided to connect said auxiliary bunk (9) at the front to said roof (4) when said auxiliary bunk (9) is disposed in said raised position.

11. A cab according to any one of claims 5 to 10, **characterised in that** each of said supporting and guide means (19) comprises a recess (31) which is capable of permitting the insertion of said pin (13) in said sliding gate (20).

12. A cab according to claim 11, **characterised in that** the supporting and guide means (19) comprises a removable closure element (32) for said recess (31).

13. A cab according to any one of claims 1 to 12, **characterised in that** said auxiliary bunk (9) can be positioned in an intermediate position in which said auxiliary bunk (9) is tilted forwards and upwards; said auxiliary bunk (9) being adjustable between said intermediate and lowered positions by a movement comprising a third rotation about said rear axis (15).

14. A cab according to any one of the preceding claims, **characterised in that** it comprises first braking means (34, 38) for damping possible oscillations of said auxiliary bunk (9) when said auxiliary bunk (9) is disposed in said raised position.

15. A cab according to claim 14, **characterised in that** said first braking means (34, 38) are capable of damping said first rotation by friction.

16. A cab according to claims 14 or 15, **characterised in that** said first braking means comprise two brake pivots (38) which are disposed at the longitudinal ends of said auxiliary bunk (9) and two first brake elements (34) which are each capable of cooperating with a respective brake pivot (38) during the execution of said first rotation.

17. A cab according to any one of claims 13 to 16, **characterised in that** it comprises second braking means (37, 38) for damping possible oscillations of said auxiliary bunk (9) when said auxiliary bunk (9) is disposed in said intermediate position.

18. A cab according to claim 17, **characterised in that** said second braking means (37, 38) are capable of damping said third rotation by friction.

19. A cab according to claims 17 or 18, **characterised in that** said second braking means comprise two brake pivots (38) which are disposed at the longitudinal ends of said auxiliary bunk (9), and two second brake elements (37) which are integral with said first supporting and guide means (17) and which are each capable of cooperating with a respective brake pivot (38).

## Patentansprüche

1. Führerhaus für ein kommerzielles Fahrzeug, umfassend eine Rückwand (3), einen Hilfssitz (7), der in einer Position benachbart zur Rückwand (3) untergebracht ist, und eine querverlaufende Hilfskoje (9), die über dem Hilfssitz (7) angeordnet ist und zwischen einer gehobenen, Nicht-Betriebs-Position, in der die Hilfskoje (9) die Verwendung des Hilfssitzes (7) ermöglicht, und einer gesenkten Position, einer horizontalen Betriebsposition, einstellbar ist, wobei die Hilfskoje (9) zwei Längsenden (12) und an jedem getrennten Längsende (12) einen vorderen Längspin (14) und einen hinteren Längspin (13) umfasst; wobei die Pins (13, 14) koaxial in Paaren angeordnet sind, um eine Vorderachse (16) und eine Hinterachse (15) zu definieren, die sich längs entlang der Hilfskoje (9) erstrecken; und erste Unterstützungs- und Führungsmittel (17) für die hinteren Pins (13) vorgesehen sind und zweite Unterstützungs- und Führungsmittel (18) für die vorderen Pins (14) vorgesehen sind, um der Hilfskoje (9) zu erlauben, zwischen der gehobenen und gesenkten Position durch eine Bewegung bewegt zu werden, die eine erste Drehung um die Hinterachse (15) und eine zweite Drehung um die Vorderachse (16) umfasst; **dadurch gekennzeichnet, dass** das zweite Unterstützungs- und Führungsmittel (18) zwei im Wesentlichen horizontale Führungen (26) umfasst und jeder vordere Pin (14) im Stande ist, an der entsprechenden Führung (26) unterstützt zu werden und entlang der Führung (26) quer bewegt zu werden.

2. Führerhaus nach Anspruch 1, **dadurch gekennzeichnet, dass** es ferner eine erste und zweite Querkoje (5, 9) umfasst, wobei dessen erste Koje (5) unter der zweiten (9) angeordnet ist; wobei der Hilfssitz (7) ein Sitzpolster (6) umfasst, das durch die erste Koje (5) definiert ist, und die zweite Koje (9) die Hilfskoje (9) ist.

3. Führerhaus nach Anspruch 1 oder 2, **dadurch gekennzeichnet, dass** die gehobene Nicht-Betriebs-Position eine Position ist, die nach vorne und oben gekippt ist.

4. Führerhaus nach Anspruch 1, **dadurch gekennzeichnet, dass** die ersten Unterstützungs- und Führungsmittel (17) zwei Unterstützungs- und Führungseinrichtungen (19) umfassen, die an gegenüberliegenden Längsenden (12) der Hilfskoje (9) angeordnet sind; wobei jede der (19) Unterstützungs- und Führungseinrichtungen (19) ein erstes und ein zweites Unterstützungselement umfasst, wobei das erste Unterstützungselement über dem zweiten angeordnet ist, um einen hinteren Pin (13) jeweils in der gehobenen Position und in der gesenkten Position zu unterstützen.

5. Führerhaus nach Anspruch 4, **dadurch gekennzeichnet, dass** jede Unterstützungs- und Führungseinrichtung (19) ein Gleittor (20) für den entsprechenden hinteren Pin umfasst; wobei das Gleittor (20) die zwei Unterstützungselemente miteinander verbindet.

6. Führerhaus nach Anspruch 5, **dadurch gekennzeichnet, dass** das Gleittor (20) zwei im Wesentlichen horizontale Endteile (21, 22) umfasst, wobei jedes davon ein entsprechendes Unterstützungselement definiert.

7. Führerhaus nach Anspruch 5 oder 6, **dadurch gekennzeichnet, dass** sich jedes Gleittor (20) in einer im Wesentlichen vertikalen Ebene erstreckt, um einen Gleitverlauf des hinteren Pins zwischen den zwei Unterstützungselementen zu definieren.

8. Führerhaus nach Anspruch 7, **dadurch gekennzeichnet, dass** der Weg im Wesentlichen V-förmig ist, wobei dessen Scheitelpunkt (23) nach vorn zeigt und dessen freies Ende mit den entsprechenden Unterstützungselementen kommuniziert.

9. Führerhaus nach einem der Ansprüche 4 bis 8, **dadurch gekennzeichnet, dass** die zwei im Wesentlichen horizontalen Führungen (26) im Wesentlichen koplanar mit dem entsprechenden Unterstützungs- und Führungsmittel (19) sind.

10. Führerhaus nach einem der Ansprüche 1 bis 9, **dadurch gekennzeichnet, dass** es eine Rückwand (3) und zwei im Wesentlichen vertikale Seitenwände (2) und ein im Wesentlichen horizontales Dach (4) umfasst; wobei die ersten und zweiten Unterstützungs- und Führungsmittel (17) durch die Seitenwände (2) unterstützt sind und lösbare Kopplungsmittel (27) vorgesehen sind, um die Hilfskoje (9) vorn mit dem Dach (4) zu verbinden, wenn die Hilfskoje (9) in der gehobenen Position angeordnet ist.

11. Führerhaus nach einem der Ansprüche 5 bis 10, **dadurch gekennzeichnet, dass** jedes der Unterstützungs- und Führungsmittel (19) eine Aussparung (31) umfasst, die im Stande ist, das Einbringen des Pins (13) in das Gleittor (20) zu erlauben.

12. Führerhaus nach Anspruch 11, **dadurch gekennzeichnet, dass** das Unterstützungs- und Führungsmittel (19) ein entfernbares Verschlusselement (32) für die Aussparung (31) umfasst.

13. Führerhaus nach einem der Ansprüche 1 bis 12, **dadurch gekennzeichnet, dass** die Hilfskoje (9) in einer Zwischenposition positioniert werden kann, in der die Hilfskoje (9) nach vorn und oben gekippt ist; wobei die Hilfskoje (9) zwischen der Zwischen- und gesenkten Position durch eine Bewegung einstellbar ist, die eine dritte Drehung um die Hinterachse (15) umfasst.

14. Führerhaus nach einem der vorhergehenden Ansprüche, **dadurch gekennzeichnet, dass** es erste Bremsmittel (34, 38) zum Dämpfen möglicher Schwingungen der Hilfskoje (9) umfasst, wenn die Hilfskoje (9) in der gehobenen Position angeordnet ist.

15. Führerhaus nach Anspruch 14, **dadurch gekennzeichnet, dass** die ersten Bremsmittel (34, 38) im Stande sind, die erste Drehung durch Reibung zu dämpfen.

16. Führerhaus nach Anspruch 14 oder 15, **dadurch gekennzeichnet, dass** die ersten Bremsmittel zwei Bremszapfen (38), die an den Längsenden der Hilfskoje (9) angeordnet sind, und zwei erste Bremsmittel (34) umfassen, die jeweils im Stande sind, mit einem entsprechenden Bremszapfen (38) während der Ausführung der ersten Drehung zusammenzuwirken.

17. Führerhaus nach einem der Ansprüche 13 bis 16, **dadurch gekennzeichnet, dass** es zweite Bremsmittel (37, 38) zum Dämpfen möglicher Schwingungen der Hilfskoje (9) umfasst, wenn die Hilfskoje in der Zwischenposition angeordnet ist.

18. Führerhaus nach Anspruch 17, **dadurch gekennzeichnet, dass** die zweiten Bremsmittel (37, 38) im Stande sind, die dritte Drehung mittels Reibung zu dämpfen.

19. Führerhaus nach Anspruch 17 oder 18, **dadurch gekennzeichnet, dass** die zweiten Bremsmittel zwei Bremszapfen (38), die an den Längsenden der Hilfskoje (9) angeordnet sind, und zwei zweite Bremselemente (37) umfassen, die integral mit den ersten Unterstützungs- und Führungsmitteln (17) sind und die jeweils im Stande sind, mit einem entsprechenden Bremszapfen (38) zusammenzuwirken.

## Revendications

1. Cabine pour un véhicule commercial, comprenant une paroi arrière (3), un siège auxiliaire (7) installé dans une position adjacente à ladite paroi arrière (3) et un berceau auxiliaire transversal (9) qui est disposé au-dessus dudit siège auxiliaire (7) et qui est ajustable entre une position non fonctionnelle relevée dans laquelle ledit berceau auxiliaire (9) permet l'utilisation dudit siège auxiliaire (7), et une position fonctionnelle horizontale abaissée, ledit berceau auxiliaire (9) comprenant deux extrémités longitudinale (12) et, à chaque extrémité longitudinale séparé (12), un axe longitudinal avant (14) et un axe longitudinal arrière (13); lesdits axes (13, 14) étant disposés coaxialement par paires pour définir un axe avant (16) et un axe arrière (15) s'étendant longitudinalement le long dudit berceau auxiliaire (9); et des premiers moyens de support et de guidage (17) sont prévus pour lesdits axes arrière (13) et des deuxièmes moyens de support et de guidage (18) sont prévus pour lesdits axes avant (14) pour permettre le déplacement dudit berceau auxiliaire (9) entre lesdites positions relevées et abaissées par un mouvement comprenant une première rotation autour dudit axe arrière (15) et une deuxième rotation autour dudit axe avant (16); **caractérisé en ce que** lesdits deuxième moyens de support et de guidage (18) comprennent deux guides (26) sensiblement horizontaux, et chaque axe frontal (14) est apte à être supporté sur ledit guide respectif (26) et à être déplacé transversalement le long dudit guide (26).

2. Cabine selon la revendication 1, **caractérisée en ce qu'**elle comprend un premier et un deuxième berceau transversal (5, 9), ledit premier berceau (5) étant disposé sous le deuxième (9); ledit siège auxiliaire (7) comprenant un coussin de siège (6) défini par ledit premier berceau (5), et ledit deuxième berceau (9) étant ledit berceau auxiliaire (9).

3. Cabine selon les revendications 1 ou 2, **caractérisée en ce que** la position non fonctionnelle relevée est une position basculée vers l'avant et vers le haut.

4. Cabine selon la revendication 1, **caractérisée en ce que** lesdits premiers moyens de support et de guidage (17) comprennent deux dispositifs de support et de guidage (19) disposés aux extrémités longitudinales opposées (12) dudit berceau auxiliaire (9); chacun desdits (19) dispositifs de support et de guidage (19) comprenant un premier et un deuxième élément de support, le premier élément de support étant disposé au-dessus du deuxième pour supporter un axe arrière (13) dans ladite position relevée et dans ladite position abaissée, respectivement.

5. Cabine selon la revendication 4, **caractérisée en ce que** chaque dispositif de support et de guidage (19) comprend une coulisse (20) pour l'axe arrière respectif; ladite coulisse (20) reliant lesdits deux éléments de support entre eux.

6. Cabine selon la revendication 5, **caractérisée en ce que** ladite coulisse (20) comprend deux parties d'extrémité sensiblement horizontale (21,22) dont chacune définie un élément de support respectif.

7. Cabine selon les revendications 5 ou 6, **caractérisée en ce que** chaque coulisse (20) s'étend dans un plan sensiblement vertical pour définir une course de coulissement de l'axe arrière entre les deux éléments de support.

8. Cabine selon la revendication 7, **caractérisée en ce que** ladite course est sensiblement en forme de V avec son sommet (23) dirigé vers l'avant, et son extrémité libre communiquant avec les éléments de support respectifs.

9. Cabine selon l'une des revendications 4 à 8, **caractérisée en ce que** les deux guides sensiblement horizontaux précités (26) sont sensiblement coplanaires avec les moyens de support et de guidage respectifs (19).

10. Cabine selon l'une des revendications 1 à 9, **caractérisée en ce qu'**elle comprend une paroi arrière (3) et deux parois latérales sensiblement verticales (2) et un toit sensiblement horizontal (4); les premier et deuxième moyens de support et de guidage (17) étant supportés par lesdites parois latérales (2), et des moyens de couplage relâchables (27) étant prévus pour relier ledit berceau auxiliaire (9) à l'avant audit toit (4) lorsque ledit berceau auxiliaire (9) est disposé dans ladite position relevée.

11. Cabine selon l'une des revendications 5 à 10, **caractérisée en ce que** chacun desdits moyens de support et de guidage (19) comprend un évidement (31) qui permet l'insertion dudit axe (13) dans ladite coulisse (20).

12. Cabine selon la revendication 11, **caractérisée en ce que** le moyen de support et de guidage (19) comprend un élément de fermeture amovible (32) pour ledit évidement (31).

13. Cabine selon l'une des revendications 1 à 12, **caractérisée en ce que** ledit berceau auxiliaire (9) peut être positionnée dans une position intermédiaire dans laquelle ledit berceau auxiliaire (9) est basculé vers l'avant et vers le haut; ledit berceau auxiliaire (9) étant ajustable entre lesdites positions intermédiaires et abaissées par un mouvement comprenant une troisième rotation autour dudit axe arrière (15).

14. Cabine selon l'une des revendications précédentes, **caractérisée en ce qu'**elle comprend un premier moyen de freinage (34, 38) pour amortir des oscillations éventuelles dudit berceau auxiliaire (9) lorsque ledit berceau auxiliaire (9) est disposé dans ladite position relevée.

15. Cabine selon la revendication 14, **caractérisée en ce que** lesdits premiers moyens de freinage (34, 38) sont aptes à amortir ladite première rotation par friction.

16. Cabine selon les revendications 14 ou 15, **caractérisée en ce que** lesdits premiers moyens de freinage comprennent deux pivots de frein (38) qui sont disposés aux extrémités longitudinales dudit berceau auxiliaire (9) et deux premiers éléments de frein (34) qui sont chacun apte à coopérer avec un pivot de freins respectifs (38) pendant l'exécution de ladite première rotation.

17. Cabine selon l'une des revendications 13 à 16, **caractérisée en ce qu'**elle comprend des deuxièmes moyens de freinage (37, 38) pour amortir des oscillations éventuelles dudit berceau auxiliaire (9) lorsque ledit berceau auxiliaire (9) est disposé dans ladite position intermédiaire.

18. Cabine selon la revendication 17, **caractérisée en ce que** lesdits deuxièmes moyens de freinage (37, 38) sont aptes à amortir ladite troisième rotation par friction.

19. Cabine selon les revendications 17 ou 18, **caractérisée en ce que** lesdits deuxièmes moyens de freinage comprennent deux pivots de frein (38) qui sont disposés aux extrémités longitudinales dudit berceau auxiliaire (9), et deux deuxièmes éléments de frein (37) qui sont réalisés intégralement avec ledit premier moyen de support et de guidage (17) et qui sont aptes à coopérer avec un pivot de freins respectif (38).
